(19) Europäisches Patentamt
European Patent Office
Office européen des brevets

(11) EP 1 010 458 A2

# (12) EUROPEAN PATENT APPLICATION

(43) Date of publication:
**21.06.2000 Bulletin 2000/25**

(51) Int. Cl.[7]: **B01D 71/64**

(21) Application number: **99124065.6**

(22) Date of filing: **10.12.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **15.12.1998 US 212081**

(71) Applicant:
**AIR PRODUCTS AND CHEMICALS, INC.**
**Allentown, PA 18195-1501 (US)**

(72) Inventors:
- **Langsam, Michael**
  **Allentown, PA 18104-2902 (US)**
- **Laciak, Daniel Vincent**
  **Macungie, PA 18062 (US)**

(74) Representative:
**Schwabe - Sandmair - Marx**
**Stuntzstrasse 16**
**81677 München (DE)**

## (54) Fluid separation membranes formed from polyetherimides

(57) Polymeric fluid separation membranes which exhibit good fluid separation properties are formed from polyetherimides made by reacting bisphenol A-etherdianhydride with 1,5 naphthalene diamine. Such membranes exhibit enhanced gas transport properties in a wide range of separation applications.

EP 1 010 458 A2

## Description

CROSS-REFERENCE TO RELATED APPLICATIONS

Not applicable.

STATEMENT REGARDING FEDERALLY SPONSORED RESEARCH OR DEVELOPMENT

Not applicable.

BACKGROUND OF THE INVENTION

The present invention relates to polymeric membranes, and more particularly membranes formed from polyetherimides, which are useful for separating components of a fluid mixture.

The commercial application for gas separation devices based on polymeric materials relies, in part, on maximizing the overall gas flux through the membrane. P. H. Kim, et al., J. Appl. Poly. Sci., **34** 1767 (1987), reported that the gas flux for a membrane is relatable to the average space between the polymer chains. In addition, they indicated that the density of the polymer is also related to the overall gas flux. One challenge for commercial applications is to identify polymers which have both very high flux and good thermo-mechanical properties. It has generally been observed that to achieve high overall flux requires having a polymer with low chain-chain interactions. This can be exemplified by polymers such as poly(dimethylsiloxane) or poly(4-methyl-1-pentene). These materials have rather high gas flux values, but due to their low chain-chain interaction, they also have low glass transition temperatures (Tg). As a consequence, these materials require either special processing conditions to build-in chemical and physiochemical crosslinking or else they can only be used at low application temperatures. By contrast, polymers with strong chain-chain interactions have rather high Tg values but typically exhibit low gas flux.

Polyimides, which generally have strong chain-chain interactions and high Tg values, have been reported to have good gas flux values for certain specific structures. Specifically, U.S. Patent 3,822,202 (1974); Re 30,351 (1980) discloses a process for separating fluids using a semi-permeable membrane made from polyimides, polyesters or polyamides. The repeating units of the main polymer chain of these membranes are distinguished in that such repeating units have at least one rigid divalent subunit, wherein the two main chain single bonds extending from the subunit are not colinear, the subunit is sterically unable to rotate 360° around at least one of these bonds, and has 50% or more of its main chain atoms as members of aromatic rings.

U.S. Patent 4,378,400 discloses gas separation membranes formed from aromatic polyimides based upon biphenyltetra-carboxylic dianhydride for separating various gas mixtures.

U.S. Patent 4,705,540 discloses a highly permeable aromatic polyimide gas separation membrane and processes for using said membrane. The membrane is an aromatic polyimide membrane in which the phenylenediamines are rigid and are substituted on all of the positions ortho to the amino substituents, and the acid anhydride groups are attached to rigid aromatic moieties.

U.S. Patents 4,717,393, 4,717,394 and teach polymeric membranes and processes using the membranes for separating components of a gas mixture. The membranes disclosed in these patents are semi-flexible, aromatic polyimides, prepared by polycondensation of dianhydrides with phenylenediamines having alkyl substituents on all ortho positions to the amine functions, or with mixtures of other, non-alkylated diamines in which some components have substituents on all positions ortho to the amine functions

U. S. Patent 4,897,092 discloses membranes formed from a class of polyimides characterized in that the diamine portion of the polymer structure is an alkylated bisaniline, and the bridging group of the diamine possesses restricted, rotatably rigid substituents. U.S. Patent 4,954,144 discloses membranes formed from polyimides in which the diamine portion of the polymer structure is formed from 2,5-di-t-butyl-1,4-phenylenediamine.

U. S. Patent 4,931,182 discloses membranes formed from unsaturated copolyimides. The copolyimides from which the membranes are formed are characterized in that the dianhydride portion of the imide is 6-F dianhydride. One diamine in the structure is an aromatic diamine and the second diamine is an alkenylated phenylene or diphenylene which contain a vinyl or vinylaryl group

S. Maiti and A. Ray, "Processable Heat-Resistant Polymers. VII. Synthesis and Characterization of Polyamideimide from N-(p-Carboxyphenyl)trimellitimide and p,p'-Di(aminocyclohexyl)methane", J. Appl. Poly. Sci., vol. 27, 4345-4356 (1982) discloses heat stable polyamideimides; and in "Processable Heat-Resistant Polymers. XIII. Structure-Property Relationship in Polyamideimides", J. Appl. Poly. Sci., vol. 28, 225-239 (1983) report the relationship between the structure and the properties of heat stable polyamideimides.

Yang, et al., "New Poly(amide-imide)s Synthesis", J. of Poly. Sci., Part A: Polymer Chemistry, vol. 30, 1855-1864 (1992), discloses the synthesis of aromatic poly(amide-imide)s having high inherent viscosities by direct polycondensation reaction of 2,5-bis(4-trimellitimidophenyl)-3,4-diphenylthiophene and aromatic diamines. Yang, et al., U.S. Patent 5,268,487, discloses the preparation of heat resistant poly(amide-ether-imide)s having improved strength and processability.

H. C. W. M. Buys, et al., "Aromatic Copolyimide Membranes for High Temperature Gas Separations: $H_2/CH_4$, $H_2/N_2$, and $O_2/N_2$", J. Appl. Poly. Sci., vol. 41, 1261-1270 (1990) discloses a study done to assess the effect of polymer molecular structure of aromatic copolyimide membranes on the permeability and permselectivity of gases.

T. A. Barbari, "Polymeric Membranes Based On Bisphenol-A For gas Separations", J. Menb Sci., 42 (1989) 69 - 86, examined several commercially available bisphenol-A-based polymers to determine the effect of the connecting group on membranes formed from these polymers. One type of membrane studied was formed from the commercially available polyetherimide ULTEM 1000.

BRIEF SUMMARY OF THE INVENTION

We have found a new class of polymeric membranes which exhibit surprisingly good fluid transport properties and are useful for a wide variety of fluid separation operations. The membranes are characterized in that they are formed from polyetherimides, wherein the dianhydride portion of the polyetherimide is derived from bisphenol A-etherdianhydride and the diamine portion is derived from 1,5 naphthalene diamine. These membranes were found to exhibit superior fluid separation properties when compared to membranes formed from other polyetherimides.

DETAILED DESCRIPTION OF THE INVENTION

We have found that polyetherimides prepared by reacting bisphenol A-etherdianhydride (BPA-DA) with 1,5 naphthalene diamine (NAPda) can be used to form membranes which exhibit superior fluid separation properties compared to membranes formed from other polyetherimides, such as ULTEM® 1000 (a commercially available polyetherimide formed from BPA-DA and *m*phenylene diamine).

The membranes of the present invention are formed from polyetherimides having repeating units represented by the structural formula:

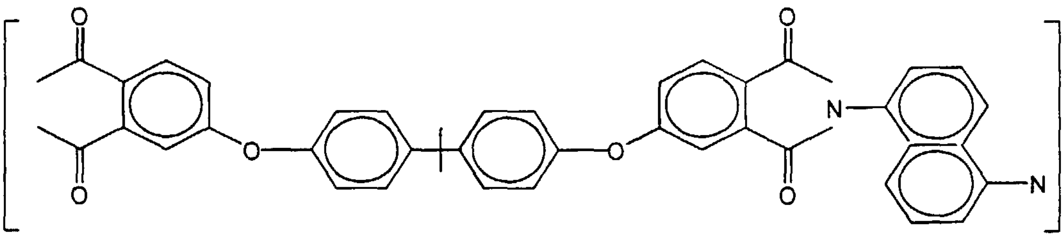

Polyetherimides having this structure; i.e., BPA-DA/NAPda, are soluble in aprotic casting solvents and accordingly can easily be cast into membranes, including hollow fiber, spiral wound and flat sheet membranes. Typically, the polyetherimides used to form the membranes have a weight average molecular weight ($\overline{M}w$) of from 15,000 to 100,000. Membranes formed from these polyetherimides exhibit desirable fluid transport properties and are useful for a wide range of fluid separation applications, including dehydration, separation of oxygen and nitrogen, hydrocarbon separation, and the like.

We have found that having NAPda as the diamine portion of the polyetherimide is critical for achieving a membrane having good fluid separation properties. Specifically, we have found that membranes formed from NAPda-containing polyetherimides exhibit significantly higher $O_2$ permeance ($PO_2$); i.e., typically greater than 0,8, than membranes formed from typical commercial polyetherimides, such as those having *m*Pda as the diamine portion of the polymer.

We have also found that having BPA-DA for the dianhydride portion of the polyetherimide is critical in obtaining a polymer which is soluble in aprotic solvents such as NMP, DMAc, DMF, and the like. By contrast, the presence of Benzophenone Dianhydride (BTDA), biphenyl dianhydride (BPDA) or sulfone dianhydride (SDA) with NAPda in the polyetherimide results in an insoluble polymer at the imidization stage (see comparative Example 26 below).

The preparation of these polyetherimides can be carried out using well known

synthesis methodologies, which include: a) low temperature formation of the polyamic acid followed by modest heating and chemical imidization, and

b) high temperature thermal polymerization and imidization.

We have successfully employed both of these techniques for the preparation of the subject polyetherimides using bisphenol A-ether-dianhydride (BPA-DA) manufactured by General Electric, Plastics Division [Mt. Vernon Indiana].

The following examples are presented to better illustrate the present invention and are not meant to be limiting.

EXPERIMENTAL

Example 1 - Preparation of BPA-DA/NAPda by low temperature chemical imidization.

To a 500 ml 3 neck round bottom flask were added the following components:

NAPda 7.75189 (.049 moles)
NMP 50 ml

The reaction mixture was heated to 10°C to dissolve the NAPda. Once the solid had dissolved, the reaction mixture was cooled to 0°C with wet ice. To the cool homogeneous solution was added at once:

BPA-DA [99.3% pure] 261890 gm (.050 moles)
NMP 25 ml

This was allowed to stir overnight at room temperature. The next morning the reaction mixture, which was homogenous, was diluted with:

| | |
|---|---|
| NMP 50 ml | |
| Acetic anhydride | 15 ml [.14 moles] |
| Triethyl amine | 7.5 ml [.06 moles] |

and the temperature was raised to 95°C for three hours. The reaction mixture was precipitated in five fold excess methanol, filtered and dried overnight at 150°C.

Yield (recovered) 95% theoretical
$\overline{M}w$= 94,600
MWD 6.31
IV .502 dL/gm

Example 2 - Preparation of BPA-DA/NAPda by high temperature process.

To a 500 ml 3 neck round bottom flask were added the following components.

NAPda 7.75189 (.049M)
BPA-DA 26.1890 (.050M)
NMP 60 ml
*m*xylene 15 ml

The reaction mixture was heated to 175°C for one hour. At this point ~2 ml of water was collected in a dean-stark trap by a zeotropic distillation procedures. The temperature was ramped upwards as:

| Time | Temp. |
|---|---|
| 1 hour | 200°C |
| 1 hour | 230°C |
| 1/2 hour | 250°C |

During the fast 1-1/2 hours ~50 ml of *m*xylene-NMP were distilled off of the reaction mixture. The heater both was removed and 100 ml of pure NMP was added at once to the hot polymer dope. After 3 hours at room temperature, the polymer dope was precipitated as in Example 1.

Yield (recovered) 95% theoretical
$\overline{M}w$≡ 134,900
MWD 4.85
IV .712 dL/gm

Examples 3 - 10 - Gas transport properties of BPA-DA/NAPda polyetherimides.

Several samples of the BPA-DA/NAPda polyetherimides prepared in Example 2 above were placed in a standard test cell and contacted with a pressurized air stream. The $P(N_2)$, $P(O_2)$, and $\alpha(O_2/N_2)$ were measured and are reported in Table 1 below.

Table 1

| $P(O_2)$ and $\alpha(O_2/N_2)$ for BPA-E-DA/NAPda based Polyimide | | | |
|---|---|---|---|
| Example | $P(N_2)$ | $P(O_2)$ | $\alpha(O_2/N_2)$ |
| 3 | .1154 | .8734 | 7.57 |
| 4 | .1155 | .8505 | 7.40 |
| 5 | .1215 | .9173 | 7.55 |
| 6 | .1191 | .9133 | 7.67 |
| 7 | .1182 | .8841 | 7.48 |
| 8 | .1282 | .9745 | 7.60 |
| 9 | .1231 | .9421 | 7.65 |
| 10 | .1128 | .8521 | 7.55 |

Comparative Examples 11 - 18 - Gas transport properties of ULTEM 1000.

The transport properties of the present membranes were contrasted to those of Ultem® 1000. To quantify the differences in gas transport properties of NAPda vs *m*Pda, we prepared and dried the *m*Pda based polyimide. The lower Tg for this material (215°C) required a very careful and prolonged drying regiment with TGA measurements to insure the material was at a "low" level of residual solvent. A residual solvent level of 0.5% was considered "dry". The first series of experiments were on thermally formed Ultem 1000 film provided by GE. Samples of files were used "as received" from GE and after 12 days at 190°C. Under the test conditions the P/α combination falls from .317/8.58 to .285/8.19. The decline in $P(O_2)$ with a simultaneous decrease in $\alpha(O_2/N_2)$ may be due to the annealing of these films at 190°C/full vacuum/12 days. During the calendering operation to prepare these films the time at which the material is above Tg following the final rolls may be fractions of a minute. It would not be unanticipated that the heating of these films to 190°C for 12 days would reduce any excess free volume. This, along with the gas transport measurements, are detailed in Table 2 below. A comparison of the "As is" and "annealed" films by wide angle x-ray scatter showed no changes in inter-chain distances that would account for the change in P/α properties.

Table 2

| P/α Properties for Ultem® 1000 Thermally Formed | | | | | |
|---|---|---|---|---|---|
| Example | Condition | Residual Solvent[1] | $P(N_2)$ | $P(O_2)$ | $\alpha(O_2/N_2)$ |
| 11 | (a)As is | <0.5% | .0365 | .3110 | 8.52 |
| 12 | As rec'd. no drying | | .0361 | .3032 | 8.40 |
| 13 | | | .0381 | .3272 | 8.59 |
| 14 | | | .0373 | .3283 | 8.80 |
| | Ave. | | .0370 | .317 | 8.58 |
| | S.D. | | ±.0009 | ±.012 | ±.17 |
| 15 | (b) Annealed | <.5% | .0353 | .2894 | 8.20 |
| 16 | heated 190°C/full vacuum | | .0333 | .2800 | 8.41 |
| 17 | 12 days | | .0359 | .2855 | 7.95 |
| 18 | | | .0353 | .2699 | 7.56 |
| | Ave. | | .0348 | .285 | 8.19 |
| | S.D. | | ±.0014 | ±.0047 | ±23 |

[1] By TGA techniques

Comparative Examples 19-25

These studies on Ultem® 1000 calendered film provided us with P/α information on material which may not be relatable to our solvent cast systems. We undertook to prepare Ultem® 1000 polymeric films by solvent casting from both chloroform and NMP. The cast films were prepared by a standardized system to eliminate any unforeseen variables in forming the dense films. The films were dried between 190°C - 205°C as indicated. The residual solvent was measured by TGA techniques. The P/α properties are detailed in Table 3 below. Films dried at 190°C/4 days/full vacuum had ~1.7% residual solvent; independent of whether chloroform or NMP was used as the solvent. At these levels reducing the solvent to .58% changed the P/α values to .24/8.30.

Table 3

| P/α Properties for Ultem® 1000 from Casting Solvents | | | | | | |
|---|---|---|---|---|---|---|
| Example | Film Technique | Residual Solvent[1] | Cell # | $P(N_2)$ | $P(O_2)$ | $\alpha(O_2/N_2)$ |
| | Solvent Cast | | | | | |
| 19 | $-CHCl_3$ | 1.8% | 1823 | .0396 | .3237 | 8.17 |
| 20 | | | 3369 | .0314 | .2725 | 8.68 |
| 21 | | | 6269 | .0357 | .2988 | 8.37 |
| 22 | -NMP[2] | 1.6% | 7324 | .0319 | .2648 | 8.30 |
| 23 | | | 4506 | .0391 | .3038 | 7.77 |
| 24 | NMP[3] | .58 | 3514 | .0273 | .2213 | 8.25 |
| 25 | | .58 | 4514 | .0318 | .2656 | 8.35 |

[1] By TGA technique
[2] Dried at 190°C/4 days [TGA Traces 2, 3]. 190°C/4 days/full vacuum
[3] Dried at 205°C/10 days [TGA Trace 4]. 205°C/ 10 days/full vacuum

From this data we found a linear relationship for P/α vs. residual solvent. Based on these data changing the

diamine from *m*Pda to NAPda changes the $P(O_2)$ and $\alpha(O_2/N_2)$ properties for solvent cast films as:

| | $P(O_2)$ | $\alpha(O_2/N_2)$ |
|---|---|---|
| *m*Pda | .25 | 8.25 |
| NAPda | .90 | 7.56 |

From the above examples, it can be seen that polyetherimides based on 1,5 naphthalene diamine (NAPda) exhibit superior gas transport properties than those formed from Ultem® 1000.

Comparative Example 26

Polymerization of Benzophenone Dianhydride (BTDA) with 1,5 naphthalene diamine (1,5 NAPda).

In a 250 ml 3 neck round bottom flask equipped with a mechanical stirrer and nitrogen purge were added the following components.

| | |
|---|---|
| NAPda | 3.1640 gm (0.02M) |
| NMP | 40ml |

The mixture was stirred at ambient temperature until the NAPda was dissolved. Then BTDA 6.4444 gm (0.02M) was added as a solid and washed into the reaction flask with the 10 ml NMP.

The mixture was stirred overnight. The next day a very viscous solution which was homogeneous in appearance had formed in the reaction flask. The following components were added to the reaction flask.

| | |
|---|---|
| acetic anhydride | 5 ml |
| triethyl amine | 2.5 ml |

The flask was heated to 100°C. Within 1 hour the entire polymer mass had precipitated as a gel ball which could not be redissolved.

### Claims

1. A polymeric fluid separation membrane formed from a polyetherimide having repeating units of the structural formula:

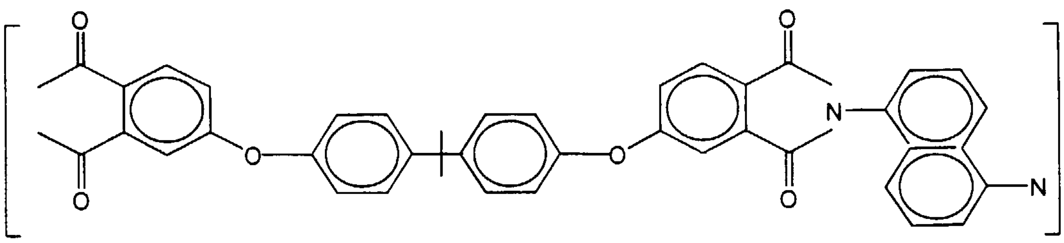

2. A polymeric fluid separation membrane in accordance with Claim 1 wherein said polyetherimide has a weight average molecular weight from 15,000 to 100,000.

3. A polymeric fluid separation membrane in accordance with Claim 1 having $P(O_2)$ of greater than 0.8.

4. A polymeric fluid separation membrane in accordance with Claim 1 which is useful for dehydration applications.

5. A polymeric fluid separation membrane in accordance with Claim 1 which is in the form of a hollow fiber.